# EUROPÄISCHE PATENTANMELDUNG

(11) **EP 2 146 548 A2**
(43) Veröffentlichungstag der Anmeldung: **20.01.2010**
(21) Anmeldenummer: 09161917.1
(22) Anmeldetag: 04.06.2009
(51) Int. Cl.: H05B 3/84

(54) **Transparente Scheibe mit einer beheizbaren Beschichtung und niederohmigen leitenden Strukturen**

(30) Priorität: 17.07.2008 DE 102008033617
(71) Anmelder: Saint-Gobain Glass France, 92400 Courbevoie (FR)
(72) Erfinder: Schall, Günther, 52372, Kreuzau (DE); Melcher, Martin, 52134, Herzogenrath (DE)
(74) Vertreter: Lendvai, Tomas

(57) **Zusammenfassung**

Transparente Scheibe mit einer elektrisch beheizbaren Beschichtung, die sich über einen wesentlichen Teil der Fläche der Scheibe erstreckt und mit mindestens zwei einander gegenüber liegenden niederohmigen Sammelleitern elektrisch verbunden ist, mindestens eine leitende Struktur das Heizfeld nur außerhalb eines zentralen Sichtfeldes überdeckt, um die Distanz zwischen den Sammelleitern (4, 5) elektrisch zu verkürzen, und der Strom auch in dem von mindestens einer leitenden Struktur (11) nicht überdeckten Teil des Heizfeldes fließt, wobei die mindestens eine leitende Struktur (11) als Feinleiterstruktur ausgebildet ist, wobei die Feinleiterstruktur (11) ein Gitternetz von elektrisch leitfähigen Linien (12) mit Knoten (13) enthält.

## Beschreibung

Die Erfindung bezieht sich auf eine transparente Scheibe mit einer elektrisch beheizbaren Beschichtung und niederohmigen leitenden Strukturen sowie eine Verbundscheibe.

Für Fahrzeug-Windschutzscheiben besteht eine große Marktnachfrage nach beheizbaren Ausführungen, wobei die Heizung optisch möglichst wenig wahrnehmbar oder störend sein soll. Deshalb wird zunehmend eine beheizbare transparente Beschichtung der Scheiben nachgefragt.

Ein generelles Problem von heizbaren Beschichtungen mit geringer Lichtabsorption ist der relativ hoher Flächenwiderstand, der jedenfalls bei großen Abmessungen der zu beheizenden Scheibe oder bei langen Strompfaden eine hohe Betriebsspannung erfordert, die jedenfalls höher als die üblichen Bordspannungen von Fahrzeugen ist. Würde man den Flächenwiderstand absenken, geht dies bei den bisher bekannten Schichtsystemen mit einer Verringerung der Transmission von sichtbarem Licht einher, da die leitfähigen Schichten dicker sein müssten.

Aus diesen technischen Gründen werden derzeit noch drahtbeheizte Scheiben bevorzugt verbaut, die sich ohne weiteres mit der üblichen Bordspannung speisen lassen. Diese Verbundscheiben mit eingelegten Heizfeldern aus sehr dünnen Drähten werden aber nicht von allen Abnehmern akzeptiert.

Das Patent DE 1 256 812 B1 beschreibt eine Glasscheibe, die mittels einer flächig auf ihre Oberfläche aufgebrachten elektrisch leitfähigen Schicht aus Metall oder Metalloxid beheizbar ist. Diese Veröffentlichung mit Anmeldepriorität aus 1963 geht von einem sehr hohen Schichtwiderstand von 200 Ω/□ aus. Um diese Schicht trotzdem mit einer verhältnismäßig geringen Spannung über zwei seitliche niederohmige Sammelleiter homogen zu beheizen, sind von den letzteren ausgehend sich über das gesamte Sichtfeld der Scheibe erstreckende schmale, gedruckte, niederohmige Kammelektroden vorgesehen. Sie enden erst jeweils kurz vor dem jeweils gegenüber liegenden Sammelleiter. Damit wird zwar erreicht, dass der Heizstrom quer zur Längserstreckung der einzelnen Linien der Kammelektroden nur verhältnismäßig kurze Wege innerhalb der Schicht zurücklegen muss.

Als Vorteil im Vergleich mit Scheiben, die nur mithilfe von gedruckten schmalen Heizleitern beheizt werden, wird dort die homogene Heizleistung bei relativ großen gegenseitigen Abständen der Kammelektroden genannt.

Die optisch schraffurartigen Linien stören jedoch die Durchsicht und den optische Anblick des Haupt-Sichtfeldes der so ausgeführten Scheibe. Der optische Vorteil einer transparenten Heizschicht bleibt ungenutzt. Diese Scheibe ist nur als Heckscheibe für Automobile vorgesehen. Als Windschutzscheibe dürfte sie auch gegenwärtig nicht eingesetzt werden, da bei diesen jedenfalls in einem genormten sogenannten A-Sichtfeld keinerlei Sichtbeeinträchtigungen vorliegen dürfen.

Ein weiteres Problem bei Heizbeschichtungen kann dadurch entstehen, dass sie mitunter nicht homogen über die gesamte Fläche der transparenten Scheibe aufgebracht werden können, sondern dass man eine oder mehrere Unterbrechungen, sogenannte "Kommunikationsfenster", darin vorsehen muss, welche den Fluss des Heizstroms beeinträchtigen und zur Ausbildung von "hot spots" (lokalen Überhitzungen) an ihren Rändern führen. Solche Kommunikationsfenster dienen dazu, die an sich kurzwellige oder infrarote Strahlen reflektierende Beschichtung lokal für bestimmte Informationsflüsse oder -signale durchlässiger zu machen.

Zum Einleiten und Abführen des Heizstroms in solche Beschichtungen wird mindestens ein Paar von streifenförmigen Elektroden oder Sammelleitern, "bus bars", vorgesehen, welche die Ströme in die Schichtfläche möglichst gleichmäßig einleiten und auf breiter Front verteilen sollen. Bei Fahrzeugscheiben, die wesentlich breiter als hoch sind, liegen die Sammelleiter meist entlang den längeren, in Einbaulage oberen und unteren, Kanten der Scheibe, so dass der Heizstrom den kürzeren Weg über die Scheibenhöhe fließen kann. Zugleich liegen die erwähnten Kommunikationsfenster zumeist an der oberen Scheibenkante und erstrecken sich dort über mehrere Zentimeter Breite.

Das Dokument WO 00/72 635 A1 beschreibt ein transparentes Substrat mit IR-reflektierender Beschichtung und einem durch flächiges Entfernen oder Fortlassen der Beschichtung hergestellten Kommunikationsfenster.

Offensichtlich bildet jegliches die Homogenität der Beschichtung verändernde Kommunikationsfenster eine Störung der Stromflüsse. Es entstehen lokale Temperaturspitzen, "hot spots", die zu Schäden am Substrat, Wärmespannungen, und an der Beschichtung selbst führen können. Das ist nicht nur dann der Fall, wenn die Beschichtung großflächig fehlt, sondern auch dann, wenn das Kommunikationsfenster durch eine mehr oder weniger große Anzahl von einzelnen, nicht zusammenhängenden Schlitzen gebildet wird. Auch diese bilden in dem betreffenden Flächenbereich eine merkliche Erhöhung des Schichtwiderstandes und lassen zugleich ebenfalls hot spots entstehen.

Das zuletzt genannte Dokument schlägt als Maßnahme zum Vermindern der Störwirkung des großflächigen Kommunikationsfensters vor, an dessen Rand ein elektrisch leitfähiges Band vorzusehen, das einen sehr viel geringeren ohmschen Widerstand pro Quadrateinheit hat als die Heizschicht. Es soll die Ströme um den Ausschnitt herum leiten. Bevorzugt wird ein Kommunikationsfenster vollständig von einem solchen Band umrahmt. Das Band kann durch Aufdrucken und Einbrennen einer leitfähigen, Silber enthaltenden Siebdruckpaste hergestellt werden. Es kann aber auch durch Auftragen eines elektrisch leitfähigen Lacks oder durch Auflegen eines metallischen Streifens angebracht werden. In allen Fällen ist natürlich eine elektrisch leitende Verbindung des Bandes mit der Beschichtung funktionsnotwendig.

Das Band kann optisch durch Überlagern eines opaken, elektrisch nicht leitfähigen Maskierungsstreifens, aus schwarzem Email kaschiert werden. Solche Maskierungsstreifen bestehen in der Regel aus einem nicht leitfähigen, schwarz gefärbten einbrennbaren Material, wie Siebdruckpaste. Infrarot-Strahlung wird von diesem Material nicht reflektiert, sondern absorbiert.

Aus WO 03/024 155 A2 ist eine einschlägige transparente Scheibe mit beheizbarer Beschichtung bekannt, bei der einerseits eine Betriebsspannung von maximal 42 V angegeben wird, die aber auch das Problem von hot spots an den Rändern eines Kommunikationsfensters zu lösen sucht. Generell werden mehrere unterschiedliche Spannungsniveaus verwendet, wobei an verkürzte Strompfade eine geringere Spannung angelegt wird, um lokale Überhitzungen zu vermeiden. Speziell wird der Bereich eines Kommunikationsfensters aus der beheizbaren Fläche ausgespart, indem man einen gesonderten Sammelleiter zwischen das Kommunikationsfenster und den anderseitigen Sammelleiter legt.

Bekannt ist ferner aus DE 36 44 297 A1 eine Vielzahl von Beispielen zum Unterteilen heizbarer Beschichtungen einer Fahrzeug-Windschutzscheibe. Unterteilungen können demnach durch flächig schichtfreie Abschnitte und/oder durch mechanisch oder mit Laserstrahlung eingebrachte Einschnitte realisiert werden. Sie dienen zum gezielten Einstellen und Lenken eines Stromflusses innerhalb der beschichteten Fläche und sollen eine möglichst gleichmäßige Stromdichte in den betreffenden Flächen gewährleisten.

Aus WO 2004/032569 A2 ist eine weitere Gestaltung einer transparenten Scheibe mit heizbarer Beschichtung bekannt, die ebenfalls eine Homogenisierung der Heizleistung in der Fläche durch in die Beschichtung eingebrachte Trennlinien zu erreichen sucht.

DE 29 36 398 A1 befasst sich mit Maßnahmen, bei einer transparenten Scheibe mit heizbarer Beschichtung Stromspitzen im Übergang von den Sammelleitern zur Beschichtung zu verhindern. Generell wird angestrebt, die abrupte Widerstandsdifferenz zwischen Beschichtung und Sammelleitern durch Verwendung höherohmiger Materialien oder Formgebungen für die letzteren, oder auch mit Zwischenwiderständen, zu verringern. Für die Beschichtung werden dort Flächenwiderstände zwischen 1 und 10 Ω/□ angegeben. In einer von mehreren dort beschriebenen Lösungsvarianten wird die zum jeweils gegenüber liegenden Sammelleiter weisende Kante jedes Sammelleiters wellenförmig ausgebildet. Die Ausbildung von zur Heizbeschichtung gerichteten Spitzen soll dabei vermieden werden. Mit diesem Ansatz wird eine merkliche Verlängerung der Übergangslinie zwischen dem Sammelleiter und der Beschichtung und damit eine Verringerung der Stromdichte in diesem Übergang angestrebt. All diese Maßnahmen erscheinen jedoch wenig dazu geeignet, die beheizbare Schicht mit einer verhältnismäßig geringen Spannung speisen zu können.

Es ist auch bekannt, auf der Lichteinfallseite von photovoltaischen Solarzellen sogenannte Gitter- oder Kammelektroden vorzusehen. Sie werden häufig durch Siebdrucken hergestellt und bestehen aus einem am Rand der Solarzelle angeordneten Sammelleiter und einer Mehrzahl von sehr schmalen Kammzinken, die sich vom Sammelleiter ausgehend über die Fläche der Solarzelle erstrecken. Sie ermöglichen ein flächenhaftes Abgreifen der photovoltaischen Spannung, die an den beiden Flächenseiten des Absorbers bzw. zwischen der frontseitigen Kammelektrode und der metallisch-vollflächigen Rückelektrode anliegt, ohne den Lichteintritt in den Absorber zu stark zu mindern.

DE 197 02 448 A1 offenbart einen beheizbaren Spiegel, auf dessen Glaskörper zwei kammartig ausgebildete und ineinander verzahnte Leiterbahnen oder Elektroden mit einer sie überdeckenden und die Zwischenräume zwischen den Kammzinken ausfüllenden PTC-Beschichtung aufgebracht sind. Hier stellt sich allerdings nicht das Problem, die Beheizung optisch unauffällig zu gestalten, weil die Leiterbahnen und die Heizschicht hinter der Spiegelschicht liegen können.

DE 198 32 228 A1 beschreibt eine Fahrzeugscheibe mit einer elektrisch leitfähigen und als Antenne genutzten optisch transparenten Beschichtung. Aus der Antennenschicht werden hochfrequente Funksignale rein kapazitiv mithilfe einer Koppelelektrode abgegriffen, die aus mehreren miteinander verbundenen dünnen Drähten besteht, die in einem im Vergleich zu ihrem Durchmesser großen Abstand parallel zueinander angeordnet sind, sich vom Rand in das Sichtfeld der Scheibe hinein erstrecken und dort blind enden. Es besteht keine galvanische Kopplung zwischen der Beschichtung und diesen Drähten, da sie jeweils in unterschiedlichen Ebenen der Verbundscheibe angeordnet sind.

Das Patent DE 10 2004 050 158 B3 beschreibt eine transparente Scheibe mit einer beheizbaren Beschichtung. Die transparente Flächenelektrode ist auf einem tragfähigen, starren oder flexiblen Substrat aufgebracht und besteht aus einem Gitternetz von elektrisch leitfähigen sehr feinen Linien mit Knoten und Maschen, wobei die sich an jeden Knoten anschließenden Linien bogen- oder wellenförmig gekrümmt sind.

Die schon mehrfach erwähnten Sammelleiter können sowohl durch Siebdruck vor oder nach dem Auftragen der Beschichtung auf die Scheibe hergestellt werden, oder durch Auflöten von dünnen Metallband-Streifen, vorzugsweise aus verzinnten Kupfer. Es gibt auch Kombinationen von gedruckten und Metallband-Sammelleitern, vergleichbar mit DE 198 29 151 C1. Die Sammelleiter werden zwar meist bandförmig und schmal ausgeführt, sind jedoch undurchsichtig. Aus optischen Gründen werden sie deshalb jeweils in der Nähe des Außenrandes der betreffenden transparenten Scheiben angeordnet. Meist können sie durch opake Randbeschichtungen kaschiert werden. Auch die erwähnten Kommunikationsfenster können durch diese Randbeschichtungen kaschiert werden, sofern letztere für die zu übertragende Strahlung hinreichend durchlässig sind.

Bei gängigen Fahrzeug-Windschutzscheiben sind diese opaken Beschichtungen als Rahmen ausgeführt, die als weitere Funktion die Klebeverbindung zwischen der Scheibe und der Karosserie gegen UV-Strahlen abschirmen. Diese Rahmen umschreiben das Sichtfeld der Scheiben. Bei Windschutzscheiben unterscheidet man ferner noch ein A-Sichtfeld inmitten der Scheibenfläche, in dem es keinerlei Sichtbeeinträchtigungen geben darf, und das näher zum Rand liegende B-Sichtfeld.

Der Erfindung liegt die Aufgabe zu Grunde, eine transparente Scheibe mit heizbarer Beschichtung zu schaffen, die bei verringerter Beeinträchtigung der Durchsicht mit verhältnismäßig geringen Betriebsspannungen betrieben werden kann und dennoch eine verhältnismäßig hohe spezifische Heizleistung erbringt.

Diese Aufgabe wird erfindungsgemäß mit den Merkmalen des Patentanspruchs 1 gelöst. Die Merkmale der Unteransprüche geben vorteilhafte Weiterbildungen dieser Erfindung an.

Mit diesen Merkmalen und Maßnahmen erreicht man eine relative Verkürzung des Weges des Stromflusses innerhalb der vergleichsweise hochohmigen Beschichtung selbst, weil ein Teil der Distanz zwischen den eigentlichen Sammelleitern und dem zentralen Haupt-Heizfeld durch niederohmige Hilfsleiterstrukturen überbrückt wird. In der Folge wird die benötigte Spannung zum Treiben des Heizstroms über die Heizfläche geringer. Durch die besondere Ausgestaltung der zumindest leitfähigen Struktur werden störende optische Effekte reduziert oder vermieden.

Dies wird von dem Fahrer als angenehm empfunden und hat zugleich sicherheitstechnische Vorteile.

Die erfindungsgemäße Teilleiterstruktur wird mit einer metallpartikelhaltigen, vorzugsweise silberhaltigen Paste, auf das leitfähige Schichtsystem aufgedruckt. Alternativ wird die Teilleiterstruktur mit einem hoch auflösenden Auftrags- oder Abtragsverfahren, vorzugsweise photolithographisch, auf einem geeigneten Substrat, wie Glas- oder Kunststoffscheibe oder Kunststofffilm (PET), hergestellt. Je nach Art der Gitterstruktur kommt auch die Herstellung aus einzelnen, gebogenen Drähten in Frage.

Die Leiterbahnen des Gitters haben eine Breite von 10 µm - 100 µm, vorzugsweise 20 µm - 40 µm, und sind aus Leseentfernung vom menschlichen Auge nicht wahrnehmbar.

Die vom Substrat abgewandte Metalloberfläche kann zusätzlich durch eine Oberflächenbehandlung dunkel eingefärbt werden.

Als besonderes Merkmal wird die erfindungsgemäße Gitterausführung zum Vermeiden von Beugungs- oder Diffraktions-Mustern sind bei regelmäßigen Mustern, insbesondere mit rechteckigen, geradlinig umschriebenen Maschenumrissen unvermeidlich mit einer speziellen Gitterstruktur ausgeführt, die in verschiedenen Varianten kommen kann. Die Diffraktions-Muster können optisch als farbiger "Stern" oder als "Schmetterling" wiedergegeben werden.

Eine generelle Formel kann so ausgedrückt werden, dass innerhalb der Gitternetzstruktur eine statistische Gleichverteilung der Richtungen aller Liniensegmente (0°...180°) produziert wird, die insgesamt im Idealfall ein kreisförmiges Beugungsmuster an jedem beliebigen Punkt der Gitterstruktur entstehen lässt.

Unter Beugungsmuster wird hier der Effekt verstanden, dass Licht an den Kanten der jeweiligen Linien gebeugt wird und damit für das menschliche Auge einen bestimmten Blendungs- oder jedenfalls Wahrnehmungseffekt hat.

Es kommen regelmäßige Strukturen in Betracht mit dem Unterschied zum Stand der Technik, dass die Verbindungslinien zwischen den Knoten bogenförmig geschwungen sind, wobei sie wahlweise in nur einer Richtung gekrümmt oder auch wellenförmig verlaufen können.

Bevorzugte Ausführungsformen sind im letzteren Fall aus Viertelkreis-Segmenten oder aus Drittelkreis-Segmenten zusammengesetzte Gittermaschen. Erstere eignen sich auch für die bereits erwähnte Herstellung aus einzelnen, gebogenen Metalldrähten. Im letzteren Fall kann wiederum die zuvor schon genannte Regel befolgt werden, dass an jedem Knoten nur drei Linien zusammentreffen.

Um die Farbstruktur der Beugungsringe in Richtung weiß und damit größerer Unauffälligkeit gegenüber dem normalerweise als weiß erkannten Licht zu verbessern, kann zusätzlich die Leiterdicke zufällig oder systematisch zwischen 10 µm und 100 µm, vorzugsweise zwischen 20µm - 40µm, so variiert werden, dass die optische Kaschierung erhalten bleibt.

Insbesondere kann bei dem vorerwähnten ungeordneten Muster die Drahtdicke so angepasst werden, dass die Stromverteilung homogener und gleichzeitig das Beugungsmuster weniger farbig wird. Das Herstellverfahren ermöglicht eine genaue Reproduktion von einmal optimierten zufälligen Strukturen. Die eigentliche Optimierung lässt sich rechnergestützt mithilfe von Simulationsprogrammen durchführen.

Für die Verwendung in stark geneigten Windschutzscheiben wird das Gitter vorzugsweise in vertikaler Richtung gestreckt, so dass die Gitterabstände in Projektion auf die Senkrechte zur Durchblickrichtung regelmäßig bleiben.

Besondere Vorteile bieten sich bei der erfindungsgemäßen Ausführung dadurch, dass
- durch den geringen Leiterabstand, daher homogenere Wärmeverteilung im Vergleich zu Drahtheizungen optisches Flimmern deutlich verringert wird;
- das aufgebrachte Gitter in rahmennahen Randbereichen einer Fensterscheibe dichter und/oder maschenfrei gemacht werden und so den üblichen schwarzen Rand-Siebdruck ersetzen kann, sofern weitere Randbedingungen wie elektrische Isolierung beachtet und erfüllt werden
- das Gitter zum oberen Rand progressiv dichter gemacht werden und somit als eingebaute Sonnenblende, auch Bandfilter genannt, dienen kann.

Grundsätzlich hat ein solches elektrisch leitfähiges Gitter, eine gewisse Abschirmfunktion gegenüber hochfrequenten elektromagnetischen Radiowellen. Sollte eine Transmission solcher Wellen für bestimmte elektronische Geräte, die mit Radiowellen wie GPS oder Straßenmauterhebung arbeiten erforderlich sein, so kann ein Kommunikationsfenster freigelassen werden, indem ein Ausschnitt der mit dem Gitter beschichteten PET-Folie entfernt wird. Um Lufteinschlüsse zu vermeiden, kann in das frei gewordene Feld eine gleich dicke PET-Folie ohne Gitter eingelegt werden.

Eine andere Variante wäre es, in dem Gitterlayout ein freies Feld (ohne Gitter) auf dem Substrat vorzusehen.

Beide Maßnahmen sind allerdings auch schon von Automobil-Windschutzscheiben mit elektrisch leitfähiger vollflächiger Beschichtung bekannt. Zum Schutz vor Korrosion wird ein Rand von etwa 1 cm bis 2 cm freigelassen.

Die Ausführungsformen der Erfindung werden ganz bevorzugt bei Windschutzscheiben angewendet, bei denen es für einen sicheren Fahrbetrieb auf eine gute Durchsicht in dem zentralen Sichtfeld ankommt, jedoch können erfindungsgemäße beheizbare Scheiben auch an anderer Stelle in Fahrzeuge sowie weitere bewegliche Maschinen und Geräte sowie in Gebäuden eingebaut werden.

Während bei den herkömmlichen Solarzellen mit Gitter- oder Kammelektroden die Spannung über die Dicke der Absorberschicht anliegt, wird bei der erfindungsgemäßen Anwendung eine Spannung mit dem Ziel angelegt, einen Strom in der Fläche der Beschichtung fließen zu lassen. Die erfindungsgemäßen niederohmige leitfähigen Strukturen haben somit die Wirkung, die am Rand der Scheibe angeordneten Sammelleiter elektrisch einander anzunähern, ohne jedoch das Sichtfeld der Scheibe wesentlich zu beeinträchtigen.

Im Einsatz in Fahrzeugen ermöglicht die erfindungsgemäße Ausgestaltung insbesondere das direkte Speisen der Windschutzscheiben-Heizung mit der üblichen Bordspannung von 12 V bis 15 V Gleichspannung, wobei dem natürlich eine möglichst niederohmige Beschichtung sehr entgegen kommt. Die Länge der Hilfsleiter wird abhängig vom effektiven Flächenwiderstand der jeweiligen Beschichtung dimensioniert; je besser leitfähig die Beschichtung selbst ist, desto kürzer werden die Hilfsleiter sein können.

Gleichwohl kann mit dieser Konfiguration die vollflächige Beschichtung der transparenten Scheibe, abgesehen von eventuell vorzusehenden Kommunikationsfenstern, beibehalten werden, so dass weder Maskierungs- noch Entschichtungsmaßnahmen notwendig werden. Somit bleiben die positiven Eigenschaften der Beschichtung, nämlich insbesondere Infrarot-Reflexion (Wärmedämmung) und homogene Farberscheinung auf ganzer Fläche, erhalten.

Da die transparente Scheibe in fast allen Fällen als Verbundscheibe ausgeführt wird, wobei die Beschichtung selbst auf einer im Verbund innen liegenden Fläche angeordnet ist, könnten die leitenden Strukturen außer durch Drucken auch als feine Drähte oder Drahtgitter ausgeführt werden, die beispielsweise in an sich bekannter Weise auf einer Verbund-Klebefolie fixiert und dann mit dieser Folie auf die Beschichtung aufgelegt werden, wobei sie in elektrischen Kontakt mit der Beschichtung treten. Dieser Kontakt ist nach dem endgültigen Verkleben der Verbundscheibe langzeitstabil.

In der Ausführung als Siebdruck-Strukturen werden die niederohmigen leitenden Strukturen vorzugsweise nach dem Abscheiden der Beschichtung auf ein Substrat, wie Glas- oder Kunststoffscheibe oder auch Kunststofffolie aufgebracht. Dies kann in einem Arbeitsgang mit dem Aufbringen der eigentlichen Sammelleiter oder bus bars geschehen.

Das Foliensubstrat enthält bevorzugt ein Polymer, bevorzugt PVB (Polyvinylbutyral), PET (Polyethylenterephthalat) und/oder EVA (Poly-Ethylvinylacetat).

Es ist ferner möglich, mit angepassten niederohmigen leitenden Strukturen ein etwa am Rand der Scheibe in die Beschichtung eingebrachtes Kommunikationsfenster niederohmig zu überbrücken, ohne die Ausbildung von hot spots befürchten zu müssen. Die Ströme in den bekannten Problemzonen an den seitlichen Rändern solcher Kommunikationsfenster werden durch entsprechende Strukturen sehr stark reduziert.

Weitere Einzelheiten und Vorteile des Gegenstands der Erfindung gehen aus der Zeichnung und einem Ausführungsbeispiels in Gestalt einer Fahrzeug-Windschutzscheibe hervor. Es zeigen in vereinfachter, nicht maßstäblicher Darstellung
- Fig. 1: eine Ausführungsform einer transparenten Scheibe mit einer elektrisch heizbaren Beschichtung mit bandförmigen Sammelleitern und Leiterelementen,
- Fig. 2: eine Windschutzscheibe mit Kommunikationsfenstern,
- Fig. 3: zeigt einen Querschnitt durch eine Verbundscheibe,
- Fig. 4: einen Ausschnitt aus einer ersten Ausführungsform einer transparenten Flächenelektrode oder eines elektrisch leitfähigen Flächengebildes aus einem Liniengitter, dessen Linien als Viertelkreise ausgeführt sind, so dass sich bei großer Regelmäßigkeit trotzdem ein Lichtbrechungsbild in der gewünschten Form einstellt;
- Fig. 5: einen Ausschnitt aus einer zweiten Ausführungsform mit einem Liniengitter, dessen zwischen je zwei Knoten sich erstreckende Linien als Drittelkreise ausgeführt sind;
- Fig. 6a/6b: eine Gegenüberstellung zweier Beugungsbilder von Punktlichtquellen-Durchlicht an einem regelmäßigen Rechteckgitter nach dem Stand der Technik und an einem erfindungsgemäß abgewandelten Gitter.

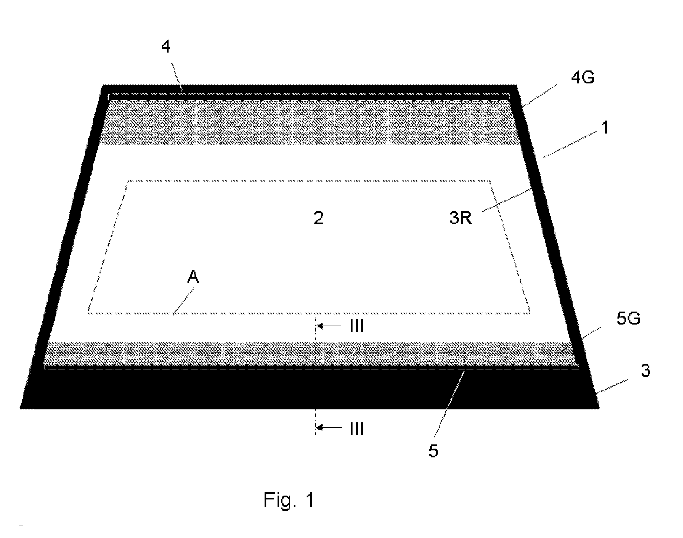

Gemäß **Fig. 1** ist in einer heizbaren Verbundscheibe 1 mit im Wesentlichen trapezförmigem geschwungenen Umriss in an sich bekannter Weise eine vollflächige transparente und elektrisch leitfähige Beschichtung 2 eingebettet. Der äußere Rand der kontinuierlich beschichteten Fläche ist allseitig vom Außenrand der Verbundscheibe 1 nach innen rückversetzt oder ein Randstreifen ist von der vollflächigen Beschichtung abgeteilt. Man erreicht so einerseits eine elektrische Isolierung nach außen, andererseits einen Schutz der Beschichtung gegen Korrosionsschäden, die vom Außenrand vordringen. Der Einzug des äußeren Randes kann durch Entfernen der Beschichtung entlang des Randes der Scheibe, durch Maskieren des Substrats vor dem Abscheiden der Beschichtung oder auch durch Einbringen einer entlang dem Außenrand der Scheibe umlaufenden Trennlinie, die die Beschichtung durchdringenden, hergestellt sein, welche den Zwecken der Isolation und Korrosionsschutz genügen kann.

Die Beschichtung selbst besteht bevorzugt aus einem thermisch hoch belastbaren Schichtsystem mit mindestens einer metallischen Teilschicht, das die zum Biegen von Glasscheiben erforderlichen Temperaturen von mehr als 600 °C ohne Verschlechterung der optischen, Wärme reflektierenden und elektrischen Eigenschaften verträgt. Das Schichtsystem umfasst neben metallischen Schichten, vorzugsweise Silber, noch weitere Teilschichten wie Entspiegelungsschichten sowie Blockerschichten.

Im Zusammenhang mit der vorliegenden Erfindung können jedoch auch andere elektrisch leitfähige Schichtsysteme mit geringerer Temperaturbelastbarkeit verwendet werden, und insbesondere auch solche Schichtsysteme, die nicht unmittelbar auf einer starren Glas- oder Kunststoffscheibe, sondern auf einer Kunststofffolie, vorzugsweise PET-Folie, abgeschieden sind. All diese Schichtsysteme werden bevorzugt durch Sputtern, Magnetron-Kathodenzerstäubung, abgeschieden.

Der Quadratwiderstand Ω/□ gängiger Schichtsysteme der vorstehend erwähnten Art liegt zwischen 2 Ω/□ und 5 Ω/□. Fahrzeug-Windschutzscheiben mit solchen Schichtsystemen müssen insgesamt eine Lichttransmission von mindestens 75 % erreichen.

Der bevorzugte Quadratwiderstand der Schichtsysteme liegt im Bereich von 0.5 Ω/□ bis 1.5 Ω/□ bei einer Spannung von 12 Volt bis 15 Volt.

Auf den Rand der Verbundscheibe 1 ist eine opake Farbschicht 3 rahmenförmig aufgebracht, deren innerer Rand 3R das Sichtfeld der transparenten Verbundscheibe 1 umschreibt. Sie kann in einer anderen, im Verbund innen oder außen liegenden, Ebene der Verbundscheibe als Beschichtung liegen. Sie dient als Schutzschicht gegen UV-Strahlung für einen Klebestrang, mit dem die fertige Scheibe in eine Fahrzeugkarosserie eingeklebt wird. Außerdem kann sie optisch Anschlusselemente für elektrische Zusatzfunktionen der Verbundscheibe 1 kaschieren.

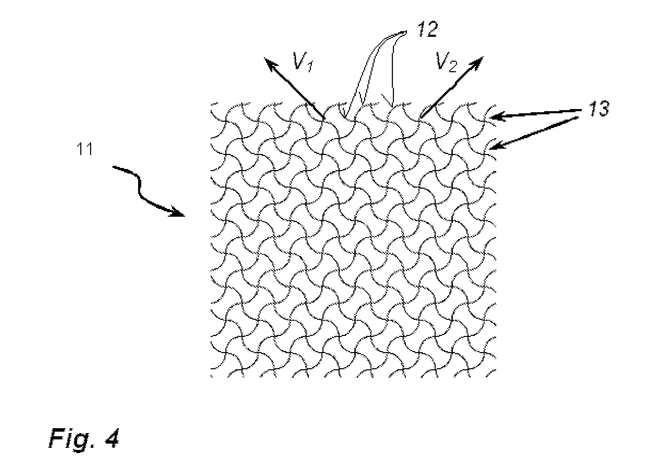

So erkennt man entlang dem oberen Rand der Verbundscheibe 1 im von der Farbschicht 3 überdeckten Flächenbereich einen ersten Sammelleiter 4 und entlang dem unteren Rand einen zweiten Sammelleiter 5 angedeutet durch eine gestrichelte Linie. Beide Sammelleiter 4 und 5 sind mit der Beschichtung 2 und der niederohmigen leitenden Struktur 4G und 5G direkt elektrisch leitend verbunden. Die leitenden Strukturen 4G und/oder 5G sind als transparente Feinleiterstrukturen 11 ausgebildet, siehe Figur 4.

Viele Fahrzeug-Windschutzscheiben sind mit einem hier nicht dargestellten getönten, jedoch lichtdurchlässigen Streifen, Bandfilter, entlang ihrer Oberkante ausgestattet, der insbesondere Blendung durch Sonnenstrahlen vermindert. Auch ein solcher Streifen kann dazu beitragen das Kommunikationsfenster optisch zu kaschieren. Er kann auch in Kombination mit der leitenden Struktur 4G eingesetzt werden.

Die Verbundscheibe 1 besteht in der Regel aus zwei starren Scheiben aus Glas und/oder Kunststoff und einer diese flächig verbindenden Klebeschicht. Die Sammelleiter 4 und 5 werden auf die Klebeschicht, wie thermoplastische Klebefolie aus Polyvinylbutyral (PVB), aus Ethylen-Vinyl-Acetat (EVA) oder auch Polyurethan (PU) aufgelegt und an deren Oberfläche fixiert, bevor die Klebeschicht mit den starren Scheiben zusammengelegt und verklebt wird.

Die Sammelleiter 4 und 5 können dünne und schmale Metallfolienstreifen, die Kupfer und/oder Aluminium enthalten, die meist auf der Klebefolie vorfixiert und beim Zusammenlegen der Verbundschichten auf die Beschichtung mit elektrischem Kontakt aufgelegt werden. Der elektrische Kontakt kann aber auch durch Auflöten der Sammelleiter 4 und 5 hergestellt werden. Im späteren Autoklavprozess wird durch Einwirkung von Wärme und Druck ein sicherer Kontakt zwischen den Sammelleitern und der Beschichtung erreicht.

Die Sammelleiter 4 und 5 können durch Aufdrucken einer leitfähigen Paste hergestellt werden, die vor dem Biegen und oder beim Biegen der Glasscheiben eingebrannt wird. Dies ist auch wesentlich weniger aufwändig als das Auflegen von Metallbandabschnitten. Allerdings haben gedruckte Sammelleiter jedenfalls bei industrieller Durchlauffertigung einen höheren ohmschen Widerstand als solche aus Metallfolienstreifen. Eine Festlegung auf Metallfolien- oder Siebdrucksammelleiter ist daher nur abhängig von dem individuellen Scheibentyp und von dem Gesamtwiderstand des Heizschichtsystems möglich.

Im Vergleich mit der Beschichtung 2 haben die Sammelleiter stets vernachlässigbare ohmsche Widerstände und heizen sich im Betrieb der Heizung nicht nennenswert auf.

Man kann in an sich bekannter Weise zwei oder mehrere getrennt elektrisch speisbare Heizfelder in der Verbundscheibe 1 mit vertikaler Teilung z. B. in der Scheibenmitte vorsehen, die natürlich auch über separate Außenanschlüsse an die jeweilige Spannungsquelle anzuschließen sind. Man kann in diesem Fall für beide Heizfelder einen gemeinsamen Masseleiter verwenden, so dass nur der Sammelleiter 4 oder der Sammelleiter 5 in zwei Abschnitte unterteilt werden muss, während der jeweils andere durchgängig ist. In der ersten Variante sind vier Außenanschlüsse notwendig, in der zweiten nur drei.

Innerhalb des vom Rand 3R der Farbschicht 3 umschriebenen Sichtfelds ist mit einer strichpunktierten Linie A das sogenannte Sichtfeld A der Verbundscheibe 1 schematisch angedeutet. Die Linie A ist keine reale Kante in der Scheibe oder der Beschichtung, sondern dient nur zur optischen Verdeutlichung der ungefähren Lage des gedachten Sichtfelds A. Letzteres ist in Anhang 18 der ECE R43 anhand von bestimmten Parametern einer beliebigen Fahrzeugumgebung definiert. In diesem Feld ist jede Art der Sichtbeeinträchtigung unzulässig. Außen um das Sichtfeld A herum erstreckt sich ein nicht gezeigtes Sichtfeld B, in dem geringfügige Sichteinschränkungen durch Einbauten zulässig sind.

Vom oberen Sammelleiter 4 ausgehend erstreckt sich eine leitende Struktur 4G in das Sichtfeld der Verbundscheibe 1 aus dem von der Farbschicht 3 überdeckten Randbereich hinein. Sie ist elektrisch mit dem Sammelleiter 4 und mit der Beschichtung 2 verbunden und ihrerseits im Vergleich mit der letzteren niederohmig. Auch vom unteren Sammelleiter 5 erstreckt sich eine leitende Struktur 5G in das Sichtfeld der Verbundscheibe 1 hinein.

Während bei konventionellen Scheiben mit Schichtheizung dieses Typs der Heizstrom über den gesamten Abstand zwischen den Sammelleitern nur über die Beschichtung fließen muss, kann diese Distanz mit den leitenden Strukturen gemäß der vorliegenden Erfindung je nach Ausdehnung des Sichtfelds A auf Werte zwischen 50 % und 80 % verkürzt werden.

Für die bereits weiter oben erörterten Zwecke der vorliegenden Erfindung müssen die leitenden Strukturen 4G und 5G neben ihrer guten Leitfähigkeit auch einen elektrischen Kontakt mit der Beschichtung 2 haben.

Bevorzugt werden die Gitterelemente aus einer gut leitfähigen, silberhaltigen Siebdruckpaste gedruckt. Die leitenden Strukturen 4G und 5G haben vorzugsweise dunkle Farben.

Verwendet man gedruckte Sammelleiter 4 und 5, so können letztere mit den leitenden Strukturen 4G und 5G in einem Arbeitsgang und aus derselben Druckpaste hergestellt werden. Danach sind keine gesonderten Arbeitsgänge mehr zum elektrischen Kontaktieren der leitenden Strukturen 4G und 5G und den Sammelleitern 4 und 5 mehr erforderlich.

Verwendet man hingegen Sammelleiter 4 und 5 aus Metallfolienbändern, so müssen diese mit der Beschichtung und den leitenden Strukturen 4G und 5G niederohmig elektrisch verbunden werden. Man wird die verzinnten Folienbänder vorzugsweise mit den leitenden Strukturen 4G und 5G in an sich bekannter Weise verlöten. Grundsätzlich lassen sich die hier verwendeten Druckpasten mit hohem Metallanteil gut mit verzinnten Metallbändern verlöten.

Die Längen und gegenseitigen Abstände der leitenden Strukturen 4G und 5G, sowie die Abmessungen der Sammelleiter 4 und 5 können hier nur schematisch gezeigt werden. Erkennbar sind jedoch die relativen Abmessungen; während die eigentlichen Sammelleiter 4 und 5 in der üblichen Bandform mit mehreren Millimetern Breite ausgeführt werden, sind die leitenden Strukturen 4G und 5G möglichst optisch sichtbar und haben ein ansehnliches Design.

Die individuelle Konfiguration in einer konkreten Verbundscheibe 1 kann zwar durch Simulationen in weiten Grenzen vorherbestimmt werden, bleibt jedoch sehr stark von der Größe und den Abmessungen der konkreten Scheibe, von der Bauart der Sammelleiter 4 und 5 und von den elektrischen Eigenschaften der realen Beschichtung 2 abhängig.

Es kann beispielsweise auch genügen, nur einen der Sammelleiter 4 oder 5 mit einer leitenden Struktur 4G oder 5G zu kombinieren. Bei relativ geringem Abstand zwischen den beiden Sammelleitern 4 und 5 können die leitenden Strukturen 4G und 5G selbst auch verkürzt werden.

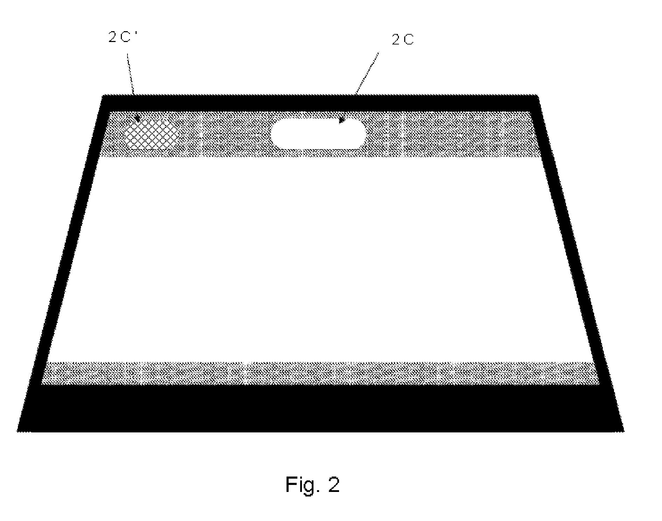

Figur 2 zeigt eine Frontscheibe mit Kommunikationsfenster 2C. Das Kommunikationsfenster 2C kann kreis-, oval-, quadrat-, rechteck-, oder dreiecksförmig sein. Das Kommunikationsfenster 2C ist vorzugsweise ein Bereich, der frei ist von leitfähiger, gedruckter Struktur. Die leitfähige, elektrisch beheizbare Beschichtung 2 kann im Kommunikationsfenster 2C entfernt werden. Das Kommunikationsfenster 2C' kann für ein besseres Erscheinungsbild mit einem nicht leitfähigen Druck kaschiert sein.

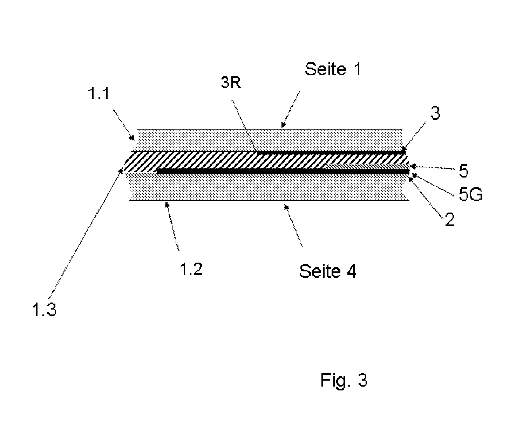

Figur 3 zeigt eine Schnittansicht durch den Rand der Scheibe 1 entlang der Linie III-III in Fig. 1. Man erkennt zwei starre Einzelscheiben 1.1, 1.2 (aus Glas oder Kunststoff) sowie eine diese in der üblichen Weise miteinander adhäsiv verbindende, optisch klar transparente, elektrisch isolierende Klebeschicht 1.3. Die leitfähige Glasbeschichtung ist hier ihrer Sichtbarkeit wegen grau schattiert gezeichnet. Die Klebeschicht 1.3 kann in der üblichen Weise durch eine etwa 0,76 mm dicke PVB-Folie gebildet sein.

Erkennbar liegt die Beschichtung 2, auf der Scheibe 1.2 oberhalb des Sammelleiters 5 und des an diesen anschließenden Gitterelements 5G, die hier vor dem Abscheiden der Beschichtung 2 als Siebdruck-Strukturen aufgetragen wurden. Die opake Farbschicht 3 ist hier auf der im Verbund innenliegenden Fläche der Scheibe 1.1 aufgedruckt, und überdeckt in der vertikalen Projektion (Durchsichtrichtung), den Sammelleiter 5 und den an letzteren direkt anschließenden Abschnitt der leitenden Struktur 5G. Die leitende Struktur 5G verläuft jedoch im Weiteren über den Rand 3R der opaken Farbschicht 3 in das Sichtfeld der Scheibe 1 hinein.

Die opake Farbschicht 3 könnte abweichend von dieser Darstellung auch auf den hier nicht sichtbaren Außenflächen einer der Scheiben 1.1 oder 1.2 liegen, oder auch auf derselben Oberfläche wie die Beschichtung 2 und die Sammelleiter 4 und 5.

Gemäß Fig. 4 besteht eine transparente Flächenelektrode 11 aus einem Gitter von feinen Wellenlinien 12, die sich entlang zweier durch nach außen weisende schräge Pfeile V₁, V₂ repräsentierter winklig zueinander verlaufender Vorzugsrichtungen erstrecken. Hier ist der Winkel ein rechter Winkel, dies ist jedoch nicht zwingend erforderlich.

Diese Linien 12, die sich jeweils in Knoten 13 kreuzen, sind auf einem transparenten Substrat 1, wie es durch die Glas- oder Kunststoffscheibe gebildet wird, durch ein geeignetes Verfahren mit einer möglichst geringen Liniendicke, durch aufdrucken aufgebracht. Sie bestehen aus einem elektrisch gut leitfähigen Material, enthaltend insbesondere metallpartikelhaltige Paste, mit metallischem Kupfer, Silber oder anderen Metallen oder Legierungen.

In der in Fig. 4 gezeigten Ausführungsform sind die Linien 12 in Viertelkreisen mit ständig wechselnder Krümmungsrichtung ausgeführt, wobei die Kreuzungspunkte oder Knoten 13 exakt in den Richtungswechseln liegen. Hierdurch entstehen regelmäßige Maschen, die nur von Viertelbögen umschrieben sind.

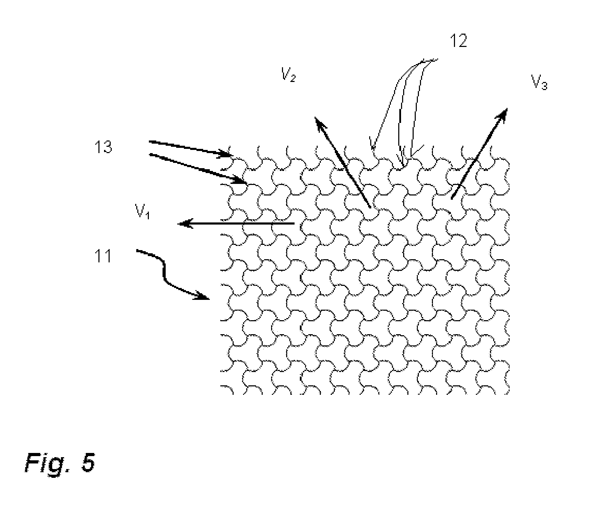

Fig. 5 zeigt einen Ausschnitt aus einer anderen Ausführungsform der erfindungsgemäßen transparenten Flächenelektrode 11. Hier sind die Gitterlinien 12 zwischen je zwei Knoten 13 als Drittelkreise ausgeführt, wobei jede Masche von je drei bezüglich des Maschenzentrums auswärts und drei bezüglich des Maschenzentrums einwärts gekrümmten Linien 12 umschrieben ist, die im Wechsel aneinander anschließen. Hieraus ergeben sich drei durch Pfeile repräsentierte Vorzugsrichtungen V₁, V₂ und V₃.

Eine weitere Ausführungsform ist ohne Vorzugsrichtung, bei der eine Maschenstruktur mit einer Knotenkonfiguration mit nur drei zusammenlaufenden Linien 12 pro Knoten erzeugt wird. Dabei können allerdings einzelne Leiterabschnitte so kurz ausfallen, dass sie ohne Vergrößerung wie Viererknoten aussehen. Es kommt zum Erreichen des gewünschten Kaschierungseffekts aber nicht unbedingt darauf an, dass an *allen* Knoten nur drei Leiterlinien zusammenlaufen; wichtig ist, dass dies für einen wesentlichen Anteil der Gesamtzahl von Knoten der Fall ist, und dass dadurch insgesamt keine Vorzugsrichtung entsteht.

Eine solche Gitterstruktur kann in Anlehnung an einen Schaum durch den folgenden Algorithmus erzeugt werden:
Zunächst werden die Koordinaten der Maschenzentren in gewünschter Anzahl zufällig ausgewählt. Von jedem Maschenzentrum werden die Verbindungslinien zu den Zentren in der Umgebung bestimmt. Zu jeder Verbindungslinie wird die Mittelsenkrechte gezeichnet, wobei die sich so ergebenden Linien an den Schnittpunkten zu benachbarten Mittelsenkrechten abgeschnitten werden.

Diese Konstruktionsvorschrift lässt sich aber auch durch eine physikalische Analogie beschreiben, die durch den obigen Algorithmus realisiert wird:
Die Gitterstruktur entspricht der Struktur eines zweidimensionalen Schwammes, die sich ergibt, wenn sich zu einem Startzeitpunkt an einer Anzahl zufälliger Punkte Blasen bilden, die sich danach Gleichförmig in alle Richtungen ausdehnen, und zwar bis sie auf benachbarte Blasen treffen. Die Anordnung der Trennwände zwischen den Blasen ist dann ein zufälliges Muster aus geraden Linien ohne Vorzugsrichtung.

Der optische Unterschied zwischen Gitterstrukturen konventioneller, regelmäßig-rechteckiger Ausführung und erfindungsgemäßen Gitterstrukturen lässt sich durch Beugungsbilder veranschaulichen. Ein Beugungsbild entsteht durch die Brechung von Licht, das durch eine Gitterstruktur gestrahlt wird, an den Kanten oder Linienabschnitten der einzelnen Maschen ebenso wie an den Kanten eines Schlitzes in einer ansonsten lichtundurchlässigen Fläche. An jedem einzelnen geraden Draht entsteht ein Beugungseffekt senkrecht zur Drahtrichtung. Im Durchlicht werden die Beugungsmuster aller Drähte addiert.

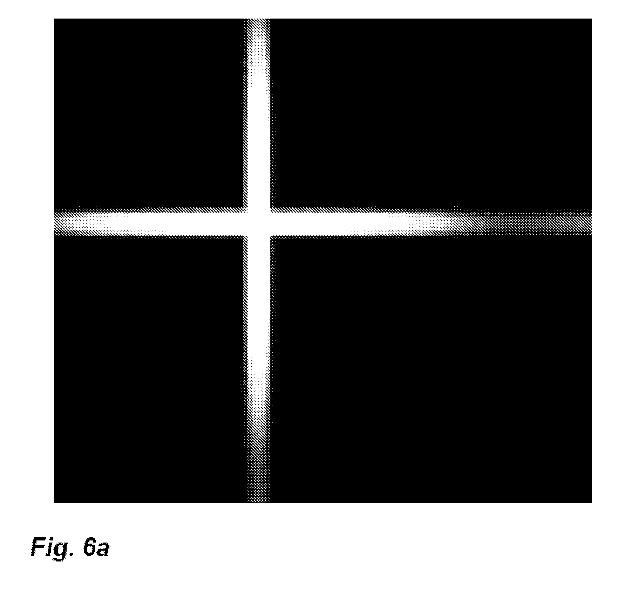

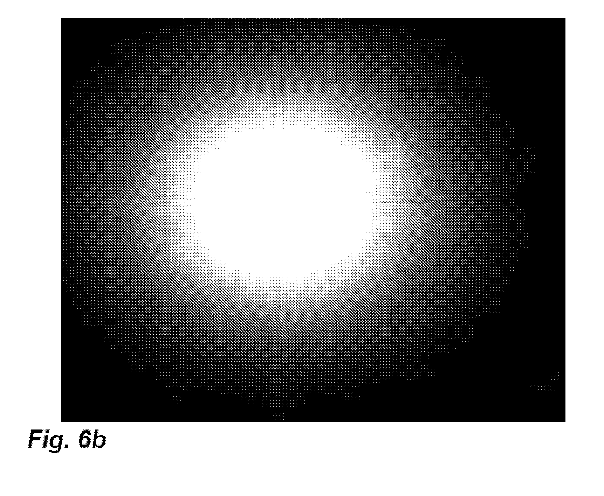

Fig. 6a zeigt ein Beugungsbild einer Gitter-Ausführung mit regelmäßigen Rechteck- oder Quadratmaschen, Fig. 6b zeigt ein Beugungsbild in der erfindungsgemäßen Gitter-Ausführung.

Diese Beugungsbilder sind durch Simulationen der direkten Betrachtung einer weißen Punktlichtquelle durch das Gitter entstanden, entsprechen aber hinsichtlich der grundsätzlichen Beugungsmuster exakt fotografischen realen Aufnahmen. Deutlich erkennt man den Unterschied zwischen Fig. 6a und 6b. Beim konventionellen Rechteckgitter in Fig. 6a wird ein Beugungsbild in Gestalt eines deutlich ausgeprägten Kreuzes erzeugt. Dies ist auf die Beugung des Lichtes an Drähten in nur zwei im exakt rechten Winkel zueinander liegenden Ausrichtungen zurückzuführen, wobei jede vorkommende Drahtrichtung bei Durchsicht eine Beugungslinie (oder einen Kreuzbalken) erzeugt, die senkrecht dazu steht.

Demgegenüber führt die erfindungsgemäße Struktur zur Entstehung eines kreisförmigen Beugungsbildes in Fig. 6b, aufgenommen an Gitterstrukturen wie sie in Fig. 4 und 5 gezeigt werden.

Durch das Vorkommen aller möglichen Drahtausrichtungen in gleichmäßiger Kreisbogenmuster- oder statistischer Schwammverteilung werden die Konzentration der Beugungsintensitäten auf nur zwei Balken und die damit zusammenhängenden Intensitätsspitzen vermieden.

Die resultierende Kreisform des Beugungsbildes dokumentiert das Fehlen solcher Intensitätsspitzen, wodurch die erfindungsgemäßen Gitterstrukturen im gebeugten Durchlicht für das menschliche Auge wesentlich weniger auffällig werden.

## Patentansprüche

1. Transparente Scheibe mit einer elektrisch beheizbaren Beschichtung, die sich über einen wesentlichen Teil der Fläche der Scheibe erstreckt und mit mindestens zwei einander gegenüber liegenden niederohmigen Sammelleitern elektrisch verbunden ist, mindestens eine leitende Struktur das Heizfeld nur außerhalb eines zentralen Sichtfeldes überdeckt, um die Distanz zwischen den Sammelleitern (4, 5) elektrisch zu verkürzen, und der Strom auch in dem von mindestens einer leitenden Struktur (11) nicht überdeckten Teil des Heizfeldes fließt, wobei die mindestens eine leitende Struktur (11) als Feinleiterstruktur ausgebildet ist, wobei die Feinleiterstruktur (11) ein Gitternetz von elektrisch leitfähigen Linien (12) mit Knoten (13) enthält.

2. Transparente Scheibe nach Anspruch 1, wobei leitfähige Linien (12) mit Knoten (13) Maschen bilden.

3. Transparente Scheibe nach Anspruch 1 oder 2, wobei die Feinleiterstruktur (11) auf der Scheibe aufgedruckt ist.

4. Transparente Scheibe nach einem der Ansprüche 1 bis 3, wobei das Gitternetz auf einem Foliensubstrat (S) aufgebracht ist, welches mit mindestens einer Klebeschicht zum flächigen Verkleben mit der Scheibe versehen ist.

5. Transparente Scheibe nach Anspruch 4, wobei das Foliensubstrat (S) PVB (Polyvinylbutyral), PET (Polyethylenterephthalat) und/oder EVA (Poly-Ethylvinylacetat)enthält.

6. Transparente Scheibe nach Anspruch 4 oder 5, wobei das Foliensubstrat (S) mindestens eine Klebeschicht zum flächigen Verkleben mit der Scheibe enthält.

7. Transparente Scheibe nach einem der vorstehenden Ansprüche, wobei die sich an jeden Knoten (13) anschließenden Linien (12) bogen- oder wellenförmig gekrümmt sind.

8. Transparente Scheibe nach einem der vorstehenden Ansprüche, wobei das Gitternetz ohne Vorzugsrichtung hergestellt ist.

9. Transparente Scheibe nach einem der vorstehenden Ansprüche, wobei die Linien (12) des Gitternetzes eine Breite zwischen 10µm und 100 µm haben, wobei die Linien (12) eines Gitternetzes entweder sämtlich gleiche Breiten haben oder in lokal unterschiedlichen Breiten ausgeführt sind.

10. Transparente Scheibe nach einem der vorstehenden Ansprüche, wobei die Linien (12) des Gitternetzes eine Breite zwischen Scheibe nach 20 µm - 40 µm haben, wobei die Linien (12) eines Gitternetzes entweder sämtlich gleiche Breiten haben oder in lokal unterschiedlichen Breiten ausgeführt sind.

11. Transparente Scheibe nach einem der vorstehenden Ansprüche, wobei das Gitternetz durch ein photolithographisches Verfahren hergestellt ist.

12. Transparente Scheibe nach einem der vorstehenden Ansprüche, wobei das Gitternetz aufgedruckt wird.

13. Transparente Verbundscheibe nach einem der vorstehenden Ansprüche, wobei sie zwei starre Scheiben (1.1, 1.2) aus Glas und/oder Kunststoff und eine Kunststofffolie (1.3) umfasst, wobei die elektrisch beheizbare Beschichtung (2), die Sammelleiter (4, 5) und das oder die niederohmigen Feinleiterstruktur (11) auf im Verbund innenliegenden Flächen der Scheibe angeordnet sind.

14. Transparente Verbundscheibe nach Anspruch 13, wobei zwischen einer Innenseite (1.2) und einer Außenseite (1.1) eine leitfähige Glasbeschichtung (1.4), eine gedruckte, niederohmige leitende Struktur (1.5), eine Kunststofffolie (1.2) und ein nicht leitfähiger Schwarzdruck (1.6) enthalten ist.

15. Verwendung der transparenten Scheibe und/oder transparenten Verbundscheibe nach einem der Ansprüche 1 bis 14 als beheizbare Fahrzeugscheibe, bevorzugt als beheizbare Windschutzscheibe.
